# EUROPEAN PATENT APPLICATION

(11) **EP 2 063 657 A1**
(43) Date of publication of application: **27.05.2009**
(21) Application number: 07785483.4
(22) Date of filing: 31.08.2007
(51) Int. Cl.: H04Q 7/38

(54) **A HANDOVER METHOD FOR MOBILE COMMUNICATION, A SYSTEM AND A BASE STATION THEREOF**

(30) Priority: 01.09.2006 CN 200610127962
(71) Applicant: Huawei Technologies Co., Ltd., Longgang District, Shenzhen, Guangdong 518129 (CN)
(72) Inventor: ZHI, Hui, Shenzhen, Guangdong 518129 (CN)
(74) Representative: Körber, Martin Hans
(86) International application number: PCT/CN2007/070601
(87) International publication number: WO 2008/040195

(57) **Abstract**

A handover method for mobile communication, a system and a base station thereof are disclosed, which method comprises the steps of: based on the existing first link bearing only the DCH service, adding the second link bearing the DCH and E-DCH service; performing the softer combination of the said first link and second link; and notifying the radio network controller by carrying the said DCH softer combination information not located at the same diversity indication selection field on the RADIO LINK ADDITION RESPONSE message and adding the E-DCH service information. With the invention, the success rate of performing the mobile communication handover could be improved, and the communication service could be maintained continuously.

## Description

This application claims the priority of Chinese patent application No. 200610127962.9 submitted to the Chinese Patent Office on September 1, 2006 and titled "METHOD FOR MOBILE COMMUNICATION HANDOVER AND SYSTEM AND BASE STATION THEREOF", the entire contents of which are incorporated herein by reference.

### Field of the Invention

The present invention relates to communication methods and systems and base stations thereof, and in particular, to a method for mobile communication handover and a system and a base station thereof.

### Background of the Invention

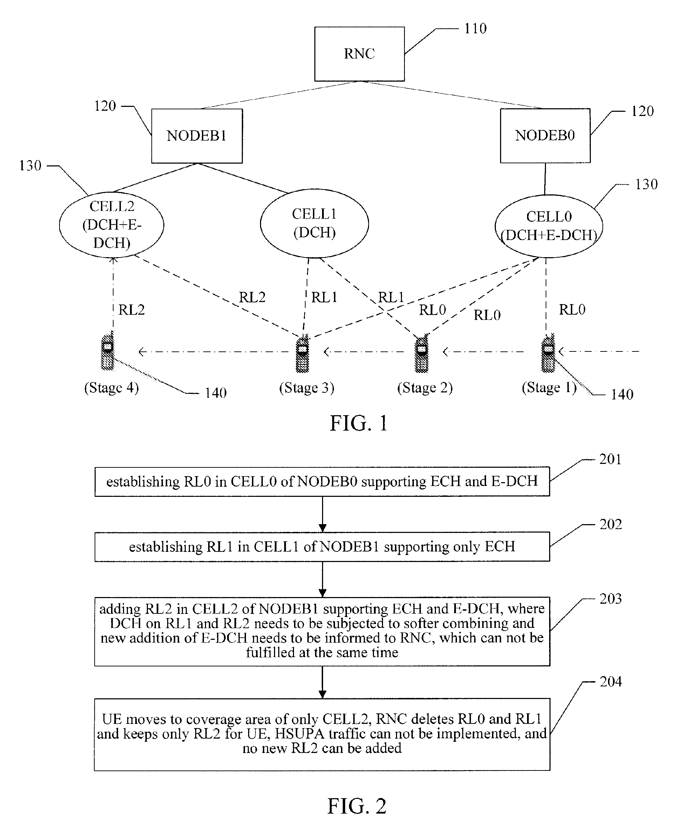

Referring to Figure 1, a radio network involved in cell handover in the prior art includes a Radio Network Controller (RNC) 110, nodes (NODEBs, i.e. base stations of a WCDMA system) 120 and User Equipments (UEs) 140 subordinate to the nodes 120. When a UE 140 is handed over between cells 130, relevant information is added by a node 120 in a RADIO LINK ADDITION (RL ADDITION) signaling process to inform the RNC 110.

Referring to Figures 1 and 2, an example of handover in the prior art, i.e. a process of switching Dedicated CHannel/Enhanced UpLink (UL) Dedicated CHannel (DCH/E-DCH) traffic between cells 130 includes the following steps.

201: At stage 1, the UE 140 establishes Radio Link (RL) 0 in CELL0 (CELL is a logic cell in the case of a WCDMA system) of NODEB0 through a signaling process for radio link establishment. CELL0 supports both DCH and E-DCH traffic. The specific traffic borne on RL0 is 3.4K + 64K (downlink only) + High Speed Uplink Packet Access (HSUPA), in which the DCH traffic refers to 3.4K + 64K (downlink only), and the E-DCH traffic refers to HSUPA.

202: At stage 2, the UE 140 moves to the common coverage area to CELL0 of NODEBO and CELL1 of NODEB1 and establishes RL1 in CELL1 of NODEB1 through a signaling process for radio link establishment. CELL1 supports only DCH traffic. In this case, the specific traffic borne on RL1 is DCH: 3.4K + 64K (downlink only). At this point, the UE 140 has two radio links RL0 and RL1, on which DCH data are subjected to soft combining at NODEB 1. The soft combining here means that a radio link is selected at the side of the RNC 110.

203: As the UE 140 continues to move at stage 3, the UE 140 adds RL2 in CELL2 of NODEB 1 through a signaling process for radio link establishment. CELL2 supports DCH and E-DCH traffic. The process for the addition includes the following.

a: CELL2 and the UE 140 detect signals for themselves respectively.

b: CELL2 and the UE 140 report the respective detection results to the RNC 110 via NODEB 1.

c: The RNC 110 sends to NODEB 1 a request for adding RL2.

d: NODEB 1 adds RL2 and informs the RNC 110 of the link establishment result via an RL ADDITION signaling process, and the RNC 110 performs communication control according to the link establishment result.

204: As the UE 140 continues to move at stage 4, the signals for the UE 140 in CELL0 and CELL1 become so weak that the RNC 110 may delete RL0 and RL1 and only one radio link RL2 remains for the UE 140.

In the above step 203, because CELL2 supports DCH and E-DCH traffic and CELL0 also supports E-DCH traffic, the RNC 110 may request NODEB 1 for bearer of E-DCH traffic on the newly added RL2, thereby enabling continuation of the traffic. Therefore, the specific traffic borne on RL2 is 3.4K + 64K (downlink only) + HSUPA. At this point, the UE 140 has three radio links RL0, RL1 and RL2. RL0 is subjected to DCH soft combining with RL1 and RL2 respectively. RL1 and RL2 are subjected to DCH softer combining. The softer combining here means that the radio links are combined at the side of a NODEB into one link for sending the data to the RNC 110.

In general, only the softer combining of the links and the new establishment/new addition of DCH/E-DCH need to be notified to the RNC 110 via an RL ADDITION signaling process. The RNC 110 directly handles the soft combining in which a link is selected between the two NODEBs. The softer combining in which the links are combined at one NODEB needs to be presented in RL ADDITION signaling by the NODEB. Likewise, the new establishment/new addition of DCH/E-DCH, which is also implemented at one NODEB, needs to be presented in RL ADDITION signaling by the NODEB.

Referring to Table 1, in sub-step d of step 203, information of the new establishment of E-DCH traffic and information of the softer combining of DCH traffic are notified to the RNC 110 in a RADIO LINK ADDITION RESPONSE message sent from NODEB1 to the RNC 110.

1. For the new establishment of E-DCH traffic, Non Combining corresponding to E-DCH Frequency Division Duplex (FDD) Information Response information needs to be selected in a CHOICE Diversity Indication field of the RADIO LINK ADDITION RESPONSE message sent from the NODEB1 to the RNC 110, so that the RNC 110 understands that a link on which E-DCH traffic runs needs to be established for the UE 140.

2. For the softer combining of DCH traffic, Combining corresponding to an RL Identifier (ID) needs to be selected in the CHOICE Diversity Indication field, so that the RNC 110 understands that softer combining of the DCH needs to be implemented for the UE 140.

**Table 1. Schematic structure of RADIO LINK ADDITION RESPONSE message**

| IE/Group Name | Presence | Range | IE Type and Reference | Semantics Description | Criticality | Assigned Criticality |
|---|---|---|---|---|---|---|
| ..... | ..... | ..... | ..... | ..... | ..... | ..... |
| RL Information Response | | *1*.. <*maxn oofRLs-1* > | | | EACH | ignore |
| >RL ID | M | | 9.2.1.53 | | - | |
| >RL Set ID | M | | 9.2.2.39 | | - | |
| >Received Total Wide Band Power | M | | 9.2.2.39A | | - | |
| **>CHOICE Diversity Indication** | **M** | | | | **-** | |
| **>>Combining** | | | | | - | |
| **>>>RL ID** | **M** | | **9.2.1.53** | **Reference RL** | - | |
| **>>Non Combining** | | | | | - | |
| **>>>DCH Information Response** | **M** | | **9.2.1.20C** | | **-** | |
| **>>>E-DCH FDD** Information Response | **O** | | **9.2.2.13Db** | | **YES** | **ignore** |
| >SSDT Support Indicator | M | | 9.2.2.46 | | - | |
| ..... | ..... | ..... | ..... | ..... | ..... | ..... |
| E-DCH Serving Cell Change Information Response | O | | 9.2.2.18Ed | | YES | Ignore |

In Information Element (IE) column in the above Table 1, the symbol ">" represents a first level field, the symbol ">>" following the symbol ">" represents a second level field subordinate to the first level field, and the symbol ">>>" represents a third level field corresponding to the second level field. For the CHOICE Diversity Indication field, two second level fields, Combining and Non Combining, are provided, to which third level fields, RL ID and DCH Information Response, are subordinate respectively. The Combining field is used to inform the RNC of the softer combining, and the Non Combining field is used to inform the RNC of the new establishment/new addition of DCH/E-DCH.

For a RADIO LINK ADDITION RESPONSE message, only one second level field, i.e. Combining or Non Combining, can be selected in the CHOICE Diversity Indication field. In other words, only one entry, Combining or Non Combining, can be selected in the CHOICE Diversity Indication field, in the case of which the CHOICE Diversity Indication field would be erroneous no matter how the CHOICE Diversity Indication field is filled.

Because in step 204, as the UE 140 continues to move at stage 4, the signals of the UE 140 in CELL0 and CELL1 become so weak that the RNC 110 may delete RL0 and RL1 and only one radio link RL2 remains for the UE 140.

In this case, if Combining is selected in the CHOICE Diversity Indication field in step 203, the E-DCH FDD Information Response information can not be notified to the RNC because only one entry can be selected in the CHOICE Diversity Indication field. At stage 4, the HSUPA traffic corresponding to E-DCH for the UE 140 is therefore interrupted. If Non Combining is selected in the CHOICE Diversity Indication field in step 203, the NODEB1 can not fill the DCH Information Response IE, resulting in failure of NODEB1 to add RL2. At stage 4, therefore, no radio link is available for the UE 140 and the entire traffic for the UE 140 is interrupted.

The process of switching DCH/E-DCH traffic between cells for a UE in the prior art is not limited to the above scenarios. The above problems may occur when softer combining needs to be implemented and establishment of relevant traffic needs to be reported to an RNC. In other words, a NODEB can not inform the RNC correctly of information of a link for a current user due to the deficiency in the structure of the RADIO LINK ADDITION RESPONSE/RADIO LINK ADDITION FAILURE message provided in the current 433 protocol, resulting in an error in signaling processing at the IUB interface (an interface between the RNC and the Node B).

### Summary of the Invention

An embodiment of the present invention provides a method for mobile communication handover, which improves success ratio of mobile communication handover.

An embodiment of the present invention provides a system for mobile communication handover, which improves success ratio of mobile communication handover.

An embodiment of the present invention provides a mobile communication base station, which improves success ratio of mobile communication handover.

The embodiments of the present invention provide the following solutions.

A method for mobile communication handover includes the following steps:
in addition to a first link for bearing DCH traffic, adding a second link for bearing DCH and E-DCH traffic;
implementing softer combining of DCH traffic on the first and second links; and
informing a radio network controller of information of the softer combining of DCH traffic and information of the addition of E-DCH traffic, according to which the radio network controller performs communication control.

A mobile communication system includes a first base station and a radio network controller, wherein
the first base station has a first link subordinate thereto for bearing DCH traffic, and is adapted to add a second link for bearing DCH and E-DCH traffic, implement softer combining of DCH traffic on the first and second links, and inform the radio network controller of information of the softer combining of DCH traffic and information of the addition of E-DCH traffic; and
the radio network controller is adapted to perform communication control according to the received information.

A mobile communication base station under the control of a radio network controller and having a first link for bearing DCH traffic is adapted to add a second link for bearing DCH and E-DCH traffic and implement softer combining of DCH traffic on the first and second links, the base station further includes:
a handover information generation unit, adapted to generate information of the softer combining of DCH traffic and information of the addition of E-DCH traffic and inform the both to the radio network controller.

In the first solution according to the present invention, the information of the softer combining and the information of the addition of E-DCH traffic are notified to the radio network controller in a message in the case that the second link for bearing DCH and E-DCH traffic is added in addition to the first link for bearing only DCH traffic, avoiding a communication fault due to the fact that only one of the information of the softer combining and the information of the addition of E-DCH traffic can be selected because only one second level field can be selected in the first level field CHOICE Diversity Indication in the prior art, and thereby improving success ratio of mobile handover of a UE between cells of different nodes and ensuring normal and stable communication.

In the second solution according to the present invention, the base station informs the information of the softer combining and the information of the addition of E-DCH traffic to the radio network controller in a message, avoiding a communication fault due to the fact that only one of the information of the softer combining and the information of the addition of E-DCH traffic can be selected because only one second level field can be selected in the first level field CHOICE Diversity Indication in the prior art, and thereby improving success ratio of mobile handover of a UE between cells of different nodes and ensuring normal and stable communication.

In the third solution according to the present invention, the base station informs the information of the softer combining and the information of the addition of E-DCH traffic to the radio network controller in a message, avoiding a communication fault due to the fact that only one of the information of the softer combining and the information of the addition of E-DCH traffic can be selected because only one second level field can be selected in the first level field CHOICE Diversity Indication in the prior art, and thereby improving success ratio of mobile handover of a UE between cells of different nodes and ensuring normal and stable communication.

### Brief Description of the Drawings

Figure 1 is a schematic diagram illustrating a scenario of mobile communication handover in the prior art;

Figure 2 is a flow chart of mobile communication handover in the scenario illustrated in Figure 1;

Figure 3 is a schematic diagram illustrating an embodiment of the mobile communication system according to the present invention; and

Figure 4 is a flow chart illustrating an embodiment of the method for mobile communication handover according to the present invention.

### Detailed Description of the Embodiments

The principle of the present invention lies in that, when softer combining needs to be implemented and establishment/addition of relevant traffic needs to be reported to an RNC in mobile communication handover, the RNC is informed of both information of the softer combining and information of the establishment of E-DCH traffic through RL ADDITION signaling according to a modified 433 protocol. Specifically, the information of the softer combining of DCH traffic and the information of the addition of E-DCH traffic are not carried in a same CHOICE Diversity Indication field of a RADIO LINK ADDITION RESPONSE message and informed to the RNC. Alternatively, both the information of the softer combining of DCH traffic and the information of the addition of E-DCH traffic are carried in a Combining field in a CHOICE Diversity Indication field of a RADIO LINK ADDITION RESPONSE message and informed to the RNC.

The embodiments of the present invention are described in detail with reference to examples and the accompanying drawings. The examples are given to illustrate how to implement the embodiments of the present invention when softer combining needs to be implemented and establishment of relevant traffic needs to be reported to an RNC. These examples relate to scenarios of mobile communication handover of a UE between two NODEBs, in which the cell of the first NODEB supports DCH and E-DCH (hereinafter referred to as DCH/E-DCH) traffic, and the second NODEB has two or three cells in which one supports DCH/E-DCH traffic and the other one/two support only DCH traffic. The UE moves from the cell of the first NODEB to the cell of the second NODEB supporting only DCH traffic, and then to the cell of the second NODEB supporting DCH/E-DCH traffic.

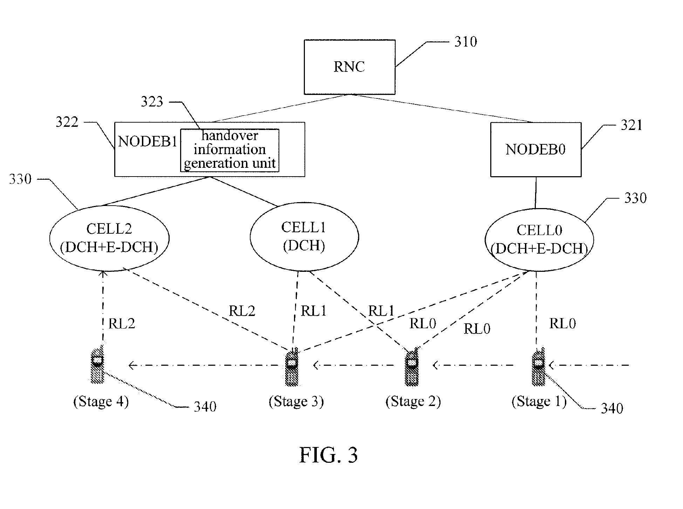

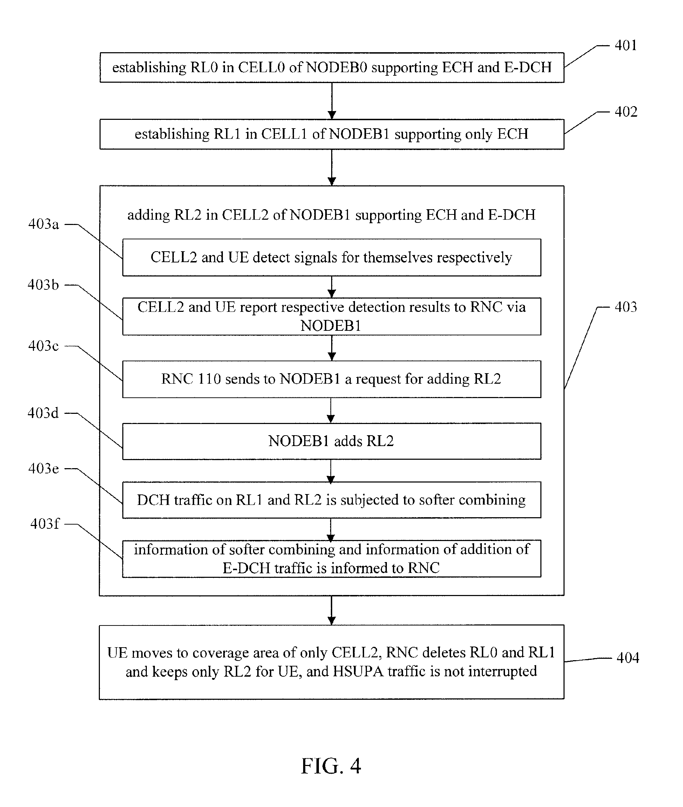

Referring to Figure 4, a process of switching DCH/E-DCH traffic between cells 330 for a UE 340 is illustrated with reference to an embodiment of the method for mobile communication handover according to the present invention. The mobile communication handover of the UE 340 is implemented between NODEB 321 and NODEB 322 which are both under the control of an RNC 310. The NODEB 321 has CELL0 and the NODEB 322 has CELL1 and CELL2. Referring to Figures 3 and 4, the process includes the following steps.

401: At stage 1, the UE 340 establishes RL0 in CELL0 of the NODEB 321 through a signaling process for radio link establishment. CELL0 supports DCH and E-DCH traffic. The specific traffic borne on RL0 is 3.4K + 64K (downlink only) + HSUPA, in which the DCH traffic refers to 3.4K + 64K (downlink only), and the E-DCH traffic refers to HSUPA.

402: At stage 2, the UE 340 moves to the common coverage area to CELL0 of the NODEB 321 and CELL1 of the NODEB 322 and establishes RL1 in CELL1 of the NODEB 322 through a signaling process for radio link establishment. CELL1 supports only DCH traffic. In this case, the specific traffic borne on RL1 is DCH: 3.4K + 64K (downlink only). At this point, the UE 340 has two radio links RL0 and RL1, on which DCH data are subjected to soft combining at the NODEB 322.

403: As the UE 340 continues to move at stage 3, the UE 340 adds RL2 in CELL2 of the NODEB 322 through a signaling process for radio link establishment. CELL2 supports DCH and E-DCH traffic. The process for the addition includes the following.

403a: CELL2 and the UE 340 detect signals for themselves respectively.

403b: CELL2 and the UE 340 report the respective detection results to the RNC 310 via the NODEB 322.

403c: The RNC 110 sends to the NODEB 322 a request for adding RL2.

403d: The NODEB 322 adds RL2.

403e: DCH traffic on RL1 and RL2 is subjected to softer combining.

403f: The link establishment result is notified to the RNC 310 by carrying information of the softer combining of DCH traffic and information of the addition of E-DCH traffic in different first level fields respectively of a RADIO LINK ADDITION RESPONSE message, and the RNC 310 performs communication control according to the link establishment result.

404: As the UE 340 continues to move at stage 4, the signals for the UE 340 in CELL0 and CELL1 become so weak that the RNC 310 deletes RL0 and RL1 and keeps RL2 successfully so that the HSUPA traffic is not interrupted.

In 403, because CELL2 supports DCH and E-DCH traffic and CELL0 also supports E-DCH traffic, the RNC 310 requests the NODEB 322 for bearer of E-DCH traffic on the newly added RL2, thereby enabling continuation of the traffic. Therefore, the specific traffic borne on RL2 is 3.4K + 64K (downlink only) + HSUPA. At this point, the UE 340 has three radio links RL0, RL1 and RL2. RL0 is subjected to DCH soft combining with RL1 and RL2. RL1 and RL2 are subjected to DCH softer combining.

In this case, the softer combining of the links and the new establishment/new addition of DCH/E-DCH need to be notified to the RNC 310 via an RL ADDITION signaling process.

Referring to Table 2, in 403f, the information of the new establishment of E-DCH traffic and the information of the softer combining of DCH traffic are notified to the RNC 310 in a RADIO LINK ADDITION RESPONSE message sent from the NODEB 322 to the RNC 310.

**Table 2. Schematic structure 1 of modified RADIO LINK ADDITION RESPONSE message**

| IE/Group Name | Presence | Range | IE Type and Reference | Semantics Description | Criticality | Assigned Criticality |
|---|---|---|---|---|---|---|
| ..... | ..... | ..... | ..... | ..... | ..... | ..... |
| >Received Total Wide Band Power | M | | 9.2.2.39A | | - | |
| >CHOICE Diversity Indication | M | | | | - | |
| >>Combining | | | | | - | |
| >>>RL ID | M | | 9.2.1.53 | Reference RL | - | |
| >>Non Combining | | | | | - | |
| >>>DCH Information Response | M | | 9.2.1.20C | | - | |
| >SSDT Support Indicator | M | | 9.2.2.46 | | - | |
| >DL Power Balancing Activation Indicator | O | | 9.2.2.12C | | YES | ignore |
| >E-DCH RL Set ID | O | | RL Set ID 9.2.2.39 | | YES | ignore |
| >E-DCH FDD DL Control Channel Information | O | | 9.2.2.13Dc | | YES | ignore |
| >Initial DL DPCH Timing Adjustment | O | | DL DPCH Timing Adjustment 9.2.2.10A | | YES | ignore |
| **>E-DCH FDD Information Response** | **O** | | **9.2.2.13Db** | | **YES** | **ignore** |
| Criticality Diagnostics | O | | 9.2.1.17 | | YES | ignore |
| HS-DSCH Serving Cell Change Information Response | O | | 9.2.2.18Ec | | YES | Ignore |
| E-DCH Serving Cell Change Information Response | O | | 9.2.2.18Ed | | YES | Ignore |

In the IE column in Table 2, the symbol ">" represents a first level field, the symbol ">>" following the symbol ">" represents a second level field subordinate to the first level field, and the symbol ">>>" represents a third level field corresponding to the second level field.

For the first level field CHOICE Diversity Indication, two second level fields, Combining and Non Combining, are provided, to which third level fields, RL ID and DCH Information Response, are subordinate respectively. The Combining field is used to inform the RNC 310 of softer combining, and the Non Combining field is used to inform the RNC 310 of new establishment/new addition of DCH.

The first level field E-DCH FDD Information Response is used to inform the RNC 310 that a link on which E-DCH traffic runs needs to be established for the UE 340. In other words, the field E-DCH FDD Information Response that is originally subordinate to the field Non Combining of the field CHOICE Diversity Indication is changed to be in parallel to the field CHOICE Diversity Indication. Therefore, combining/non-combining of DCH on RLs and new establishment/new addition of E-DCH are independent of each other. Combining of DCH is indicated by the IE CHOICE Diversity Indication.

In other words, the information of the softer combining and the information of the establishment of E-DCH traffic are notified to the RNC 310 by being not carried in a same CHOICE Diversity Indication field generated in a same RADIO LINK ADDITION RESPONSE message according to the present invention. In this embodiment, the information of the softer combining and the information of the establishment of E-DCH traffic are notified to the RNC 310 by generating different fields, i.e. the first level field CHOICE Diversity Indication and the first level field E-DCH FDD Information Response, avoiding a communication fault due to the fact that only one of the information of the softer combining and the information of the establishment of E-DCH traffic can be selected because only one second level field can be selected in the first level field CHOICE Diversity Indication in the prior art no matter how the CHOICE Diversity Indication field is filled. The communication fault is described as follows.

In 404, as the UE 340 continues to move at stage 4, the signals for the UE 340 in CELL0 and CELL1 become so weak that the RNC 310 may delete RL0 and RL1 and only one radio link RL2 remains for the UE 340. In this case, according the prior art method, the E-DCH FDD Information Response information can not be notified to the RNC because only one entry can be selected in the CHOICE Diversity Indication field as shown in Table 1. At stage 4, the HSUPA traffic corresponding to E-DCH for the UE 340 is therefore interrupted. If Non Combining is selected in the CHOICE Diversity Indication field, the NODEB 322 can not fill the DCH Information Response IE, resulting in failure of the NODEB 322 to add RL2. At stage 4, therefore, no radio link is available for the UE 340 and the entire traffic for the UE 340 is interrupted.

As can be seen, the present invention avoids the communication fault due to the fact that the RNC 310 can not be informed of both the information of the softer combining and the information of the new establishment of E-DCH traffic in the prior art and ensures normal and stable communication in the case of mobile handover of the UE 340 between cells of different NODEBs.

The scenario to which the present invention can be applied is not limited to that described above. The present invention is applicable to any cases in which softer combining needs to be implemented and establishment/addition of relevant traffic needs to be reported to the RNC, to avoid occurrence of the above problem.

The format in which the information of the DCH softer combining and the information of the addition of E-DCH traffic are filled into different first level fields respectively is not limited to that shown in Table 2. Alternatively, Combining in the first level field CHOICE Diversity Indication is used to indicate the information of the addition of E-DCH traffic, and the first level field E-DCH FDD Information Response is used to indicate the information of the DCH softer combining. Moreover, the relative position relationship between the first level fields CHOICE Diversity Indication and E-DCH FDD Information Response may be arranged arbitrarily in the table.

In an embodiment of the method for mobile communication handover according to the present invention, both the information of the DCH softer combining and the information of the addition of E-DCH traffic are carried in a Combining field subordinate to a CHOICE Diversity Indication field of a RADIO LINK ADDITION RESPONSE message and notified to the RNC, which is described as follows.

**Table 3. Schematic structure 2 of modified RADIO LINK ADDITION RESPONSE message**

| IE/Group Name | Presence | Range | IE Type and Reference | Semantics Description | Criticality | Assigned Criticality |
|---|---|---|---|---|---|---|
| ..... | ..... | ..... | ..... | ..... | ..... | ..... |
| >Received Total Wide Band Power | M | | 9.2.2.39A | | - | |
| >CHOICE Diversity Indication | M | | | | - | |
| >>Combining | | | | | - | |
| >>>RL ID | M | | 9.2.1.53 | Reference RL | - | |
| **>>>E-DCH FDD Information Response** | **O** | | **9.2.2.13Db** | | **YES** | **ignore** |
| >>Non Combining | | | | | - | |
| >>>DCH Information Response | M | | 9.2.1.20C - | | | |
| >>>E-DCH FDD >>>E-DCH FDD Information Response | O | | 9.2.2.13Db | | YES | ignore |
| >SSDT Support Indicator | M | | 9.2.2.46 | | - | |
| ..... | ..... | ..... | ..... | ..... | ..... | ..... |

This embodiment features in that both the information of the DCH softer combining and the information of the addition of E-DCH traffic are carried in the Combining field subordinate to the CHOICE Diversity Indication field in a RADIO LINK ADDITION RESPONSE message and notified to the RNC. As shown in Table 3, two third level fields RL ID and E-DCH FDD Information Response are both subordinate to the second level field Combining so that both the information of the DCH softer combining and the information of the addition of E-DCH traffic can be notified to the RNC, avoiding occurrence of the problem that they can not be both notified to the RNC in the prior art and achieving the same technical effects as the previous embodiment.

It is understood that the link for bearing DCH traffic may also be referred to as a first link and the link added for bearing DCH and E-DCH traffic may also be referred to as a second link.

Referring to Figure 3, the present invention provides a mobile communication system including a UE 340, a NODEB 321, a NODEB 322, and an RNC 310. The NODEB 322 includes a handover information generation unit 323. Mobile communication handover for the UE 340 is implemented between the NODEB 321 and NODEB 322 which are under the control of the RNC 310. The NODEB 321 has CELL0 and the NODEB 322 has CELL1 and CELL2. CELL0 and CELL2 support DCH and E-DCH traffic, and CELL1 supports only DCH traffic.

The NODEB 322 has a first link RL1 for bearing only DCH traffic. The UE 340 establishes RL1 with CELL1 of the NODEB 322 when both DCH and E-DCH traffic are implemented in CELL0 of the NODEB 321.

When the RNC 310 requests the NODEB 322 to add a new second link RL2 for bearing DCH and E-DCH traffic, the NODEB 322 implements softer combining of DCH traffic on RL1 and RL2. The NODEB 322 informs the RNC 310 of information of the softer combining and information of the new addition of E-DCH traffic through the handover information generation unit 323.

In particular, the handover information generation unit 323 is adapted to generate the information of the DCH softer combining and the information of the new addition of E-DCH traffic which are not carried in a same CHOICE Diversity Indication field in a RADIO LINK ADDITION RESPONSE message, and in particular, generate a CHOICE Diversity Indication field, the content of which is Combining, and an E-DCH FDD Information Response field, both of which are a first level field, and send the RADIO LINK ADDITION RESPONSE message carrying the information of the DCH softer combining and the information of the new addition of E-DCH traffic to the RNC 310.

For the structure of the RADIO LINK ADDITION RESPONSE message, reference may be made to the above Table 2.

The format in which the information of the DCH softer combining and the information of the addition of E-DCH traffic are filled into different fields is not limited to that shown in Table 2. Alternatively, Combining in the first level field CHOICE Diversity Indication is used to indicate the information of the addition of E-DCH traffic, and the first level field E-DCH FDD Information Response other than the first level field CHOICE Diversity Indication is used to indicate the information of the DCH softer combining. As a further alternative, Combining in the first level field CHOICE Diversity Indication is used to indicate the information of the DCH softer combining, and any fifth, fourth, third, second, or first level field other than the first level field CHOICE Diversity Indication is used to indicate the information of E-DCH traffic. Moreover, the relative position relationship between the CHOICE Diversity Indication and E-DCH FDD Information Response fields may be arranged arbitrarily in the table.

In another embodiment, the handover information generation unit 323 is adapted to generate a RADIO LINK ADDITION FAILURE message (referring to Table 3) that contains a Combining field for informing the RNC. The Combining field is subordinate to a CHOICE Diversity Indication field and carries both the information of the DCH softer combining and the information of the addition of E-DCH traffic.

It is understood that the NODEB 322 may also be referred to as a first base station and the NODEB 321 may also be referred to as a second base station.

A method for mobile communication handover and a system thereof according to the present invention have been described in detail above. Some examples have been taken to illustrate the principle and the embodiments thereof. However, the illustration of the embodiments is intended merely to provide understanding of the methods according to the present invention and the ideas thereof. According to such ideas, those skilled in the art can envisage different embodiments and applications of the present invention. Therefore, the above description should not be construed as a limitation to the scope of the present invention.

## Claims

1. A method for mobile communication handover comprising the following steps:
in addition to a first link for bearing DCH traffic, adding a second link for bearing DCH and E-DCH traffic;
implementing softer combining of DCH traffic on the first and second links; and
informing a radio network controller of both information of the softer combining of DCH traffic and information of the addition of E-DCH traffic, according to which the radio network controller performs communication control.

2. The method for mobile communication handover according to claim 1, wherein the information of the softer combining of DCH traffic and the information of the addition of E-DCH traffic are notified to the radio network controller by being both carried in a Combining field subordinate to a CHOICE Diversity Indication field of a RADIO LINK ADDITION RESPONSE message.

3. The method for mobile communication handover according to claim 1, wherein the information of the softer combining of DCH traffic and the information of the addition of E-DCH traffic are notified to the radio network controller by being not carried in a same CHOICE Diversity Indication field of a RADIO LINK ADDITION RESPONSE message.

4. The method for mobile communication handover according to claim 3, wherein the information of the softer combining of DCH traffic is indicated by a first level field CHOICE Diversity Indication containing Combining and the information of the addition of E-DCH traffic is indicated by a first level field E-DCH FDD Information Response, the field CHOICE Diversity Indication and the field E-DCH FDD Information Response are arranged as the same level.

5. The method for mobile communication handover according to any one of claims 2 to 4, wherein the information of the addition of E-DCH traffic is notified to the radio network controller in such a manner that the field E-DCH FDD Information Response is null if E-DCH traffic needs to be combined with another radio link, and is filled otherwise.

6. The method for mobile communication handover according to any one of claims 1 to 4, wherein,
the first link and the second link are established subordinate to a same base station; and
before the step of adding the second link for bearing DCH and E-DCH traffic in addition to the first link for bearing DCH traffic, the method further comprises a step of implementing DCH and E-DCH traffic subordinate to a different base station from the station to which the first link and the second link are subordinate.

7. A mobile communication system comprising a first base station and a radio network controller, wherein,
the first base station has a first link subordinate thereto for bearing DCH traffic, and is adapted to add a second link for bearing DCH and E-DCH traffic, implement softer combining of DCH traffic on the first and second links, and inform the radio network controller of both information of the softer combining of DCH traffic and information of the addition of E-DCH traffic; and
the radio network controller is adapted to perform communication control according to the received information.

8. The mobile communication system according to claim 7, wherein the information of the softer combining of DCH traffic and the information of the addition of E-DCH traffic are notified to the radio network controller by being carried in different level fields of a RADIO LINK ADDITION RESPONSE message.

9. The mobile communication system according to claim 8, wherein the different level fields of a RADIO LINK ADDITION RESPONSE message comprises a first level field CHOICE Diversity Indication and first level field E-DCH FDD Information Response, the field CHOICE Diversity Indication has a Combining field used to indicate the information of the softer combining of DCH traffic and the field E-DCH FDD Information Response is used to indicate the information of the addition of E-DCH traffic.

10. The mobile communication system according to claim 7, wherein the information of the softer combining of DCH traffic and the information of the addition of E-DCH traffic are notified to the radio network controller by being both carried in a Combining field of a RADIO LINK ADDITION RESPONSE message, which is subordinate to a choice diversity indication field and is used to carry both the information of the softer combining of DCH traffic and the information of the addition of E-DCH traffic.

11. The mobile communication system according to any of claims 7 to 10 further comprising a second base station adapted to implement DCH and E-DCH traffic with a user equipment.

12. A mobile communication base station under the control of a radio network controller and having a first link for bearing DCH traffic, adapted to add a second link for bearing DCH and E-DCH traffic and implement softer combining of DCH traffic on the first and second links, the base station further comprising:
a handover information generation unit, adapted to generate information of the softer combining of DCH traffic and the addition of E-DCH traffic and inform the both to the radio network controller.

13. The base station according to claim 12, wherein the information of the softer combining of DCH traffic and the information of the addition of E-DCH traffic are not carried in a same first level field of a RADIO LINK ADDITION RESPONSE message; or the information of the softer combining of DCH traffic and the information of the addition of E-DCH traffic are both carried in a combining field of a RADIO LINK ADDITION RESPONSE message.
